Europäisches Patentamt

European Patent Office

Office européen des brevets

(11) Publication number: **0 244 268**
**A2**

# (12) EUROPEAN PATENT APPLICATION

(21) Application number: **87303947.3**

(22) Date of filing: **01.05.87**

(51) Int. Cl.⁴: **G 05 D 23/19**

(30) Priority: **01.05.86 US 858171**

(43) Date of publication of application:
**04.11.87 Bulletin 87/45**

(84) Designated Contracting States: **DE FR GB**

(71) Applicant: **E.I. DU PONT DE NEMOURS AND COMPANY
1007 Market Street
Wilmington Delaware 19898 (US)**

(72) Inventor: **Di Cesare, John Mario
9 Fountain Court Sherwood Park II
Wilmington Delaware 19808 (US)**

**Semanski, Ludwig Carl
12 Charring Lane Coventry
New Castle Delaware 19720 (US)**

(74) Representative: **Barnard, Eric Edward et al
BROOKES & MARTIN High Holborn House 52/54 High
Holborn
London WC1V 6SE (GB)**

(54) **Power control device for temperature control.**

(57) A power control device for controlling power to resistance heaters (2, 20) in a chamber (1) in which the temperature is to be controlled and a pressure tank (19) uses a microprocessor (7) adapted to provide a temperature setting means (8) which inputs a desired temperature. The power consumed by the heater in the chamber is measured by a circuit (10, 12, 11) and compared with a desired power level calculated by the microprocessor. Temperature measuring means (4) in the chamber (1) provides a signal compared with the desired temperature. The microprocessor synchronizes an A.C. current signal and allows a triac (17) to fire for a calculated portion of each phase of A.C. current to provide power to the heater in the chamber such that the temperature therein is accurately controlled and maintained. When subambient temperatures such as -150°C are required the microprocessor controls another triac (28) in a similar manner to control power to the heater in the pressure tank which contains coolant for feeding to the chamber. The pressure in the tank is monitored and compared with a desired pressure level calculated by the microprocessor.

FIG. 1

EP 0 244 268 A2

**Description**

POWER CONTROL DEVICE FOR TEMPERATURE CONTROL

FIELD OF THE INVENTION

This invention relates to a device for controlling the electrical power supplied to a resistance heater to control temperature in a chamber.

BACKGROUND OF THE INVENTION

A number of devices and electrical circuits have been developed to control power supplied to a resistance heater in a chamber in an oven. These ovens are used in analytical instruments such as a dynamic mechanical analyzer wherein samples being tested are held at a given temperature while physical properties of the sample are being measured by the instrument. The physical properties of a sample are directly related to temperature and therefore, it is necessary to accurately control temperature. A number of tests require physical properties over a wide range of temperatures, e.g. from -100°C to 500°C, and to meet such a temperature range the control device must be able to rapidly and accurately increase and decrease temperature. One problem that occurs when attempting to control temperature is that power supplied to the heater often fluctuates. Another problem is the inability to accurately control temperature variations because of inadequate feedback control.

A solution to the power supply problem is shown in U.S.-A-3 553 458 in which power supplied to the heater is controlled by monitoring voltage supplied to the heater. This is accomplished through a voltage squaring circuit that generates a control signal proportional to the average value of the square of the voltage. A proportional controller compares the control signal with an error signal and thereby controls the power supplied to the load. This method relies on an average value of the square of the voltage and only a limited degree of precision is obtained.

U.S.-A.4 223 207 proposes another solution to the problem by measuring voltage to the heater and generating an error signal. A comparator then varies the power supplied to the heater. This technique continually changes power supplied to the heater since there must be an error signal to provide power to the heater. If there is no error signal power is not supplied to the heater and the temperature must fall to produce an error signal to supply power.

What is desired is a control system which will maintain a constant power supply to the heater and will maintain the chamber at a constant temperature with minimum variations in temperatures. Also, it is desirable to have a means which would rapidly cool the chamber particularly to temperatures below ambient temperatures and maintain the oven at such temperatures.

SUMMARY OF THE INVENTION

In its broadest aspect, the present invention provides a power control device for controlling the electrical power supplied from an alternating current (A.C) power source to an electrical resistance heater to effect temperature control; said device comprising a microprocessor programmed and configured to provide a temperature setting means, a measuring means, a power controller and calculation means, the microprocessor employing proportional integral and derivative control techniques to determine a desired power level for the heater; a temperature measuring means electrically connected to the temperature setting means of the microprocessor to enable a comparison between a desired temperature inputted to the setting means of the microprocessor and the measured temperature; sensing means for determining some parameter associated with the action of the heater and for providing a corresponding measurement signal to the measuring means of the microprocessor to enable comparison between a desired level for the parameter derived from the desired temperature and the measured level of the signal to determine the desired power level for the heater for feeding to the power controller of the microprocessor; a triac circuit containing a triac electrically connected to the heater, to the power source and to the power controller of the microprocessor; and a power phase synchronizer electrically connected to the A.C. power source and to the power controller; whereby the power controller of the microprocessor synchronizes the A.C. current signal and allows the triac of the triac circuit to fire for a calculated portion of each phase of A.C. current to provide power to the heater such that the temperature is maintained at the desired value.

In another aspect, the invention provides a power control device for controlling electrical power supplied from an alternating current (A.C.) power source to an electrical resistance heater in a chamber to effect temperature control; said device comprising a microprocessor programmed and configured to provide a temperature setting means, a power measuring means, a power controller and calculating means, the microprocessor employing proportional integral and derivative control techniques to calculate a desired power level for operating the heater; a temperature measuring means positioned in the chamber and electrically connected to the temperature setting means of the microprocessor to enable comparison between a desired temperature inputted to the setting means and the measured temperature; a triac circuit containing a triac electrically connected to the heater, the power source and to the power controller of the microprocessor; a power measuring circuit for measuring the power being fed to the heater in the chamber and for providing a corresponding power signal to the power measuring means of the microprocessor to enable comparison between the desired power level and the measured power level for utilization by the power controller of the microprocessor; and a power phase synchronizer electrically connected to the A.C. power source and to the power controller; whereby the power controller of the microprocessor synchronizes the A.C. current signal and allows the triac of the triac circuit to fire for a calculated portion of each phase of A.C. current to provide power to the heater such that the temperature in the chamber is maintained at the desired temperature.

The invention also provides a power control device for controlling electrical power supplied from an alternating circuit (A.C.) power source to an electrical resistance heater in a tank containing a liquid/gas coolant to control the expulsion of coolant from the tank into a chamber to effect temperature control; said device comprising a microprocessor programmed and configured to provide a temperature setting means, a pressure measuring means, a power controller and calculating means, the microprocessor employing proportional integral and derivative control techniques to calculate a desired pressure level and a desired power level for operating the heater, a temperature measuring means in the chamber connected to the temperature setting means of the microprocessor to enable comparison between a desired temperature inputted to the setting means and the measured temperature, a pressure measuring means positioned in the tank and electrically connected to the pressure measurement means of the microprocessor to enable comparison between the desired pressure level and the measured pressure level; a triac circuit containing a triac electrically connected to the heater, the power source and the power controller of the microprocessor, and a power phase synchronizer electrically connected to the A.C. power source and to the power controller; whereby the power controller of the microprocessor synchronizes the A.C. current signal and allows the triac of the triac circuit to fire for a calculated portion of each phase of the A.C. current to provide power to the heater to control the pressure in the tank and the supply of coolant to the chamber to maintain the temperature in the chamber at the desired temperature.

A power control device described hereinafter accurately controls power supplied to a heater in a chamber of a heating/cooling unit or an oven or to a heater in a tank used to supply coolant liquid/gas to the chamber of the unit. By constantly monitoring the temperature in the chamber of the heating/cooling unit and monitoring and controlling the power supplied to the heater a desired temperature is maintained at a constant level in the chamber with minimum variations. Also, temperatures in the chamber can be rapidly and accurately increased or decreased by the control device. The coolant tank may form part of a cooling unit which provides the coolant liquid/gas, e.g. nitrogen, to the chamber to allow for rapid cooling of the chamber below ambient temperatures with the device accurately maintaining the lower temperature. With the control device the chamber can be maintained in the range of about -150°C to 500°C and can be rapidly changed for example from 100°C to -50°C. Many physical tests performed by instruments, such as a dynamic mechanical analyzer, require physical data over a wide range of temperatures and the improved power control device can be used with such instruments.

The invention may be understood more readily and various other aspects and features of the invention may become apparent from consideration of the following description.

BRIEF DESCRIPTION OF THE DRAWINGS

An embodiment of the invention will now be described, by way of example only, with reference to the accompanying drawings, wherein:-

Fig. 1 shows a block diagram of a control device constructed in accordance with the invention for controlling heating and cooling; and

Fig. 2 depicts waveforms pertaining to the device.

DESCRIPTION OF PREFERRED EMBODIMENT

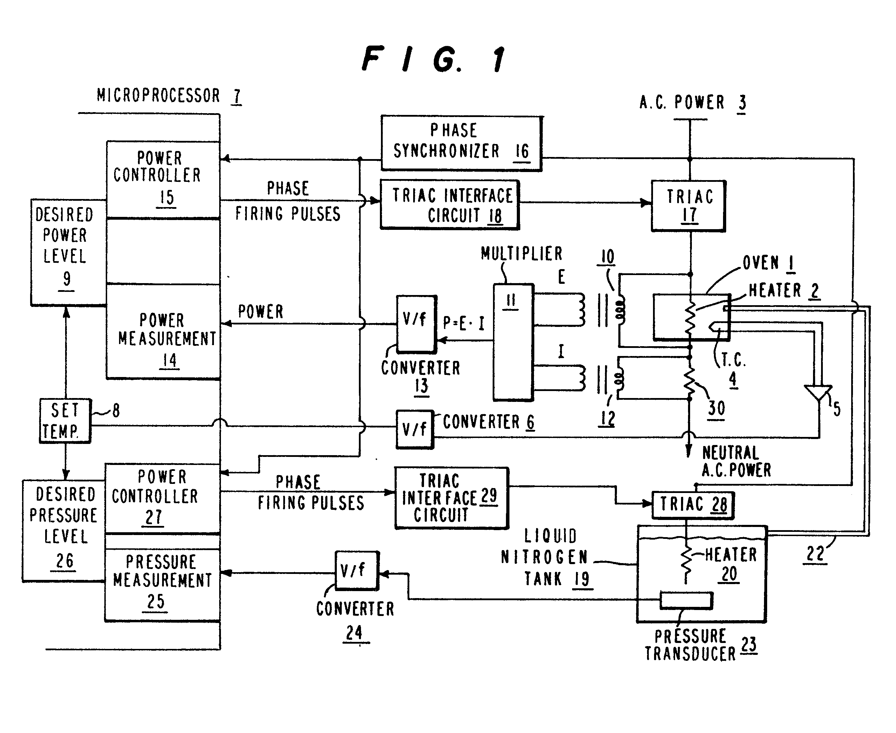

Fig. 1 shows a power control device usable with a heating/cooling unit conveniently termed an oven 1. The unit 1 contains a chamber in which the temperature is controlled by the device and is typically an insulated double wall flask such as Dewar flask. The unit 1 has a resistance type heater 2, typically, a heater wire of Kanthal alloy which is connected to an alternating circuit (A.C.) power source 3 via a triac 17 to raise the temperature in the chamber. A thermocouple (T.C.) 4 is positioned in the chamber in the oven 1 and a voltage signal from the T.C. which is directly related to the prevailing temperature in the chamber is fed to an operational amplifier 5, typically, an OP-07 with the necessary reference junction circuitry. The amplified signal is fed into a voltage/frequency (v/f) converter 6 and then to a microprocessor 7, typically an Intel 80186 microprocessor.

The microprocessor 7 is configured and programmed to provide a temperature setting section 8, power controllers 15, 27, a power measurement section 14, a desired power level section 9, a desired pressure level section 26 and a pressure measurement section 25. The function of the pressure measurement section 25 and the pressure level section 9 is described hereinafter. Although in practice, the power controllers 27 and 15 are one single common section for the purposes of this description it is convenient to treat these power controllers as two separate sections.

The microprocessor 7 is associated with a keyboard which allows an operator to set a temperature, inputted to the temperature setting section designated SET TEMP 8 in Fig. 1. Instead of a single desired temperature level a programmed series of temperatures or a ramp between two temperatures can be inputted to the setting means 8. The desired temperature is compared to the prevailing temperature as determined from the T.C. frequency signal. The microprocessor 7 then calculate the desired power level

3

using the following iterative equations.

temp error = set temp - oven temp ...............(1)

error $\text{sum}_n$ = error $\text{sum}_{n-1}$ + temp error ...........(2)

desired power = (Px temp error) +

(Ix error $\text{sum}_n$) +

Dx (oven $\text{temp}_n$ - oven $\text{temp}_{n-1}$) ...(3)

where P, I and D are proportional, integral and derative constants tuned for optimum performance.

The above iterative equations are based on the following difference equation:

$$\text{desired power} = Pe + I \sum_{o}^{n} e \, \Delta t + D \frac{e_n - e_{n-1}}{\Delta t} \quad \ldots\ldots\ldots(4)$$

where P is the proportional constant

e is the temperature error

I is the integral constant

$\Delta t$ is the sampling interval (time)

D is the derivative constant

n designates the present sampling of the indicated variable, while n-1 is the value from the previous sampling.

The instantaneous power being supplied to the heater 2 is determined by a power measuring circuit which consists of a transformer 10 typically a 12:1 reduction transformer, which is in parallel with the heater 2 and determines the voltage, E, which is fed into a multiplier 11, typically, a Burr Brown 4214. A second transformer 12, typically, a 1:12 step-up transformer, is in parallel with a resistor R30 typically a 0.1 ohm resistor, which is in series with the heater 2. Thence the current, I, being used by the heater is measured and fed to the multiplier 11. The multiplier 11 converts the voltage E, and current, I into a power voltage representing a value using formula $P = E \times I$ and the equivalent power signal is fed to a v/f converter 13 which provides a frequency signal representing power to the power measurement section 14 of the microprocessor 7.

The power controller 15 measures the power each half cycle of the power line, compares the desired power level to the measured power and adjusts the phase or delay of a firing pulse for the triac 17 via an interface circuit 18 for the next half cycle of A.C. current. The interface circuit 18 is typically a driver feeding a pulse transformer connected to the gate of the triac 17. The adjustment occurs every half cycle using the following iterative equations:

power error $\text{sum}_n$ = power error $\text{sum}_{n-1}$ + (desired power -measured power) ................................(5)

phase delay = max delay - ($K_x$ power error $\text{sum}_n$) ......(6)

where: max delay is the period of one half cycle (e.g. 8.3 ms @ 60Hz) and

K is a scale factor for the power error sum.

A power phase synchronizing circuit 16 is connected to the A.C. power source 3 and feeds the power controller 15 to synchronize it with the A.C. power. The synchronizer circuit 16 basically produces a pulse each time the A.C. power crosses zero volts.

The power controller 15 uses the synchronized signal as the starting point of each half cycle and produces a triac firing pulse after a delay as determined by the "phase delay" calculation, thereby controlling the power level supplied to the heater 2.

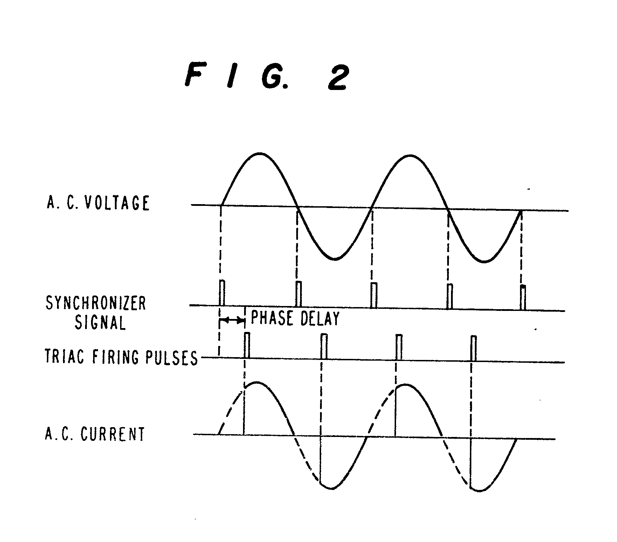

Fig. 2 illustrates the relationship of the firing pulses of the triac and the resulting A.C. current. The A.C. voltage is monitored by the synchronizer circuit which produces a pulse at each zero crossing. The power controller 15 senses this and starts a timer to delay the triac firing pulses by a predetermined value. When the triac firing pulse appears, the triac will turn on and conduct current for the remainder of that half cycle. This process is repeated each half cycle.

To provide for rapid cooling of the chamber of operation below ambient temperatures, the chamber can be cooled with coolant, conveniently nitrogen gas from a liquid nitrogen source, and Fig. 1 shows a cooling means for this purpose. The cooling means allows the controlled temperature range to be extended to subambient temperatures as low as -150°C and enables precise maintenance of subambient temperatures for extended periods of time for testing at such low temperatures. As shown, a liquid nitrogen tank 19 contains liquid nitrogen and a further heater 20. The heater 20 is connected via a triac 28 to the power source 3 and is used to generate pressure in the tank 19 which is sensed by a pressure transducer 23 positioned at the output port of the tank. As the pressure builds up, a mixture of nitrogen liquid and gas is transferred from the tank 19 to the chamber via an insulated transfer tube 22 to thereby cool the chamber. The amount of transferred liquid/gas mixture is proportional to the pressure in the tank 19 which is controlled as a function of temperature.

A signal from the pressure transducer 23 is fed to the v/f converter 24 which converts the voltage signal to a frequency signal which is then fed to the pressure measurement section 25 of the microprocessor 7. The desired pressure level section 26 derives a pressure value from the pressure measurement value and the temperature inputted to the set temp 8. The calculated desired pressure level value is fed to the power

4

controller 27. The power controller 27 is connected to the triac 28 through a triac interface circuit 29 and controls the phase of the firing pulses of the triac 28 in a similar manner to the above-described control of the triac 17.

## Claims

1. A power control device for controlling electrical power supplied from an alternating current (A.C.) power source (3) to an electrical resistance heater (2) in a chamber (1) to effect temperature control; said device comprising a microprocessor (7) programmed and configured to provide a temperature setting means (8), a power measuring means (14), a power controller (15) and calculating means, the microprocessor employing proportional integral and derivative control techniques to calculate a desired power level for operating the heater; a temperature measuring means (4) positioned in the chamber and electrically connected to the temperature setting means of the microprocessor to enable comparison between a desired temperature inputted to the setting means and the measured temperature; a triac circuit (18, 17) containing a triac (17) electrically connected to the heater (2), the power source and to the power controller (15) of the microprocessor; a power measuring circuit (10, 12, 11) for measuring the power being fed to the heater in the chamber and for providing a corresponding power signal to the power measuring means (14) of the microprocessor to enable comparison between the desired power level and the measured power level for utilization by the power controller of the microprocessor; and a power phase synchronizer (16) electrically connected to the A.C. power source and to the power controller; whereby the power controller of the microprocessor synchronizes the A.C. current signal and allows the triac of the triac circuit to fire for a calculated portion of each phase of A.C. current to provide power to the heater such that the temperature in the chamber is maintained at the desired temperature.

2. A power control device according to claim 1 and further comprising means for cooling the chamber; said cooling means having a pressure tank (19) containing liquid and gas for cooling connected to the chamber; a pressure transducer (23) for measuring the pressure in the tank; a heater (20) in the tank operable to heat the liquid and gas in the tank and thereby force the liquid and gas into the chamber; the microprocessor being further programmed and configured to provide a gas pressure measuring means (25) connected to receive a signal derived from the pressure transducer and a further power controller (27), the microprocessor employing proportional integral and derivative control techniques to calculate a desired gas pressure within the tank commensurate with the desired temperature; and a further triac circuit (29, 28) containing a triac electrically connected to the heater in the tank, the power source and to the further power controller of the microprocessor; whereby the further power controller of the microprocessor synchronizes the A.C. current signal and allows the triac of the further triac circuit to fire for a calculated portion of each phase of A.C. current to provide power to the heater in the pressure tank to heat liquid in the tank to force liquid and gas to the chamber to maintain the temperature in the chamber at a subambient desired temperature.

3. A power control device according to claim 2 in which a voltage/frequency converter (24) is electrically connected to the pressure transducer (23) and the gas pressure measuring means (25) of the microprocessor, the converter serving to convert the signal from the transducer into a frequency that can be counted by the microprocessor.

4. A power control device according to claim 2 or 3 in which the liquid and gas used for cooling is nitrogen.

5. A power control device according to any one of claims 1 to 4 in which the temperature measuring means comprises a thermocouple (4), an amplifier (5) electrically connected to the thermocouple to amplify the voltage signal generated by the thermocouple and a voltage/frequency converter 96) electrically connected to the amplifier (5) and the microprocessor, the converter acting to convert the voltage signal generated by the thermocouple into a frequency signal that can be counted by the microprocessor.

6. A power control device according to any one of claims 1 to 5 in which the power measuring circuit comprising a voltage measuring transformer (10) which is connected in parallel to the heater in the chamber and to one input of a multiplier (11) and a current measuring transformer (12) which is connected in parallel to a resistor in series with the heater and to a second input of the multiplier (11) and a voltage/frequency converter 13 electrically connected to the multiplier (11) to receive a power signal therefrom, the converter serving to convert the power signal into a frequency signal that is fed to the power measuring means of the microprocessor.

7. A power control device according to any one of claims 1 to 6 in which the or each triac circuit comprises a triac interface circuit (18, 29) electrically connected to the associated triac and to the associated power controller of the microprocessor to convert phase firing pulses determined by the power controller to a signal that is transmitted to the triac so that the triac fires for the calculated portion of each phase of A.C. current.

8. A power control device according to any one of claims 1 to 7 in which the microprocessor controls power according to the following difference equation:

$$\text{desired power} = Pe + I \sum_{o}^{n} e\, \Delta t + D\, \frac{en - en-1}{\Delta t}$$

where P is the proportional constant
e is the temperature error
I is the integral constant
$\Delta t$ is the sampling interval (time)
D is the derivative constant
n designates the present sampling of the indicated variable, while n-1 is the value from the previous sampling.

9. A power control device for controlling electrical power supplied from an alternating circuit (A.C.) power source (3) to an electrical resistance heater (20) in a tank (19) containing a liquid/gas coolant to control the expulsion of coolant from the tank into a chamber to effect temperature control; said device comprising a microprocessor (7) programmed and configured to provide a temperature setting means (8), a pressure measuring means (25), a power controller (27) and calculating means, the microprocessor employing proportional integral and derivative control techniques to calculate a desired pressure level and desired power level for operating the heater, a temperature measuring means (4) in the chamber (1) connected to the temperature setting means of the microprocessor to enable comparison between a desired temperature inputted to the setting means and the measured temperature, a pressure measuring means (23) positioned in the tank and electrically connected to the pressure measurement means of the microprocessor to enable comparison between the desired pressure level and the measured pressure level; a triac circuit (28, 29) containing a triac (28) electrically connected to the heater, the power source (3) and the power controller of the microprocessor, a power phase synchronizer (16) electrically connected to the A.C. power source and to the power controller whereby the power controller of the microprocessor synchronizes the A.C. current signal and allows the triac of the triac circuit to fire for a calculated portion of each phase of the A.C. current to provide power to the heater to control the pressure in the tank and the supply of coolant to the chamber to maintain the temperature in the chamber at the desired temperature.

10. A power control device for controlling the electrical power supplied from an alternating current (A.C) power source (3) to an electrical resistance heater (2, 20) to effect temperature control; said device comprising a microprocessor (7) programmed and configured to provide a temperature setting means (8), a measuring means (14, 25), a power controller (15, 27) and calculation means, the microprocessor employing proportional integral and derivative control techniques to determine a desired power level for the heater; a temperature measuring means electrically connected to the temperature setting means of the microprocessor to enable a comparison between a desired temperature inputted to the setting means of the microprocessor and the measured temperature; sensing means (10, 12, 11, 23) for determining some parameter associated with the action of the heater and for providing a corresponding measurement signal to the measuring means of the microprocessor to enable comparison between a desired level for the parameter derived from the desired temperature and the measured level of the signal to determine the desired power level for the heater for feeding to the power controller of the microprocessor; a triac circuit (17, 18, 28, 29) containing a triac (17, 28) electrically connected to the heater, to the power source (3) and to the power controller (15, 27) of the microprocessor; and a power phase synchronizer (16) electrically connected to the A.C. power source and to the power controller; whereby the power controller of the microprocessor synchronizes the A.C. current signal and allows the triac of the triac circuit to fire for a calculated portion of each phase of A.C. current to provide power to the heater such that the temperature is maintained at the desired value.

# F I G. 1

0244268

# F I G. 2

A. C. VOLTAGE

SYNCHRONIZER
SIGNAL

PHASE DELAY

TRIAC FIRING PULSES

A.C. CURRENT